# EUROPÄISCHE PATENTANMELDUNG

(11) **EP 2 730 553 A2**
(43) Veröffentlichungstag der Anmeldung: **14.05.2014**
(21) Anmeldenummer: 13192099.3
(22) Anmeldetag: 08.11.2013
(51) Int. Cl.: C05F 5/00, C05F 11/00, C05D 9/02

(54) **Düngekombination mit Bioethanol-Trockenschlempe und Desferricoprogen oder deren Hydrolysaten**

(30) Priorität: 08.11.2012 AT 11922012
(71) Anmelder: Agrana Stärke GmbH, 3950 Gmünd (AT)
(72) Erfinder: Grüll, Dietmar, 3442 Langenschönbichl (AT); Omann, Markus, 1020 Wien (AT); Wastyn, Marnik Michel, 2320 Schwechat (AT)
(74) Vertreter: Sonn & Partner Patentanwälte

(57) **Zusammenfassung**

Die vorliegende Erfindung betrifft eine Düngekombination enthaltend Trockenschlempe aus der Herstellung von Bioethanol zusammen mit Desferricoprogen oder einem Hydrolysat hievon sowie die Verwendung einer derartigen Düngekombination.

## Beschreibung

Die vorliegende Erfindung betrifft eine Düngekombination enthaltend Trockenschlempe aus der Herstellung von Bioethanol zusammen mit Desferricoprogen oder einem Hydrolysat hievon sowie die Verwendung einer derartigen Düngekombination im biologischen und konventionellen Landbau.

Siderophore (griech. Eisenträger) sind Chelate, die einer Stoffgruppe von mehr als 200 eisenbindenden Molekülen und Oligopeptiden angehören, die von aeroben Bakterien oder Pilzen, aber auch Pflanzenwurzeln (Phytosiderophore) gebildet werden. Die geringe Größe der Moleküle erlaubt es ihnen, die Zellwand von Bakterien, Pilzen oder Pflanzen durch relativ enge Kanäle zu durchdringen. Während Siderophore eine molare Masse von lediglich etwa 300 bis 2.000 Dalton aufweisen, besitzen die Eisentransportproteine von Vertebraten wesentlich höhere molare Massen (wie beispielsweise Transferrin mit etwa 80.000 Dalton).

Siderophore werden von fast allen Bakterien und Pilzen gebildet, wobei strikte anaerobe Bakterien die Ausnahme sind, diese können jedoch exogene Siderophore nützen. Auch einige Pflanzen sind in der Lage sogenannte Phytosiderophore zu produzieren. Es gibt auch Hinweise, dass marine Organismen, wie Phytoplankton und Cyanobakterien, Siderophore bilden.

Bei Eisenmangel werden Siderophore von den sie produzierenden Bakterien oder Pilzen bzw. Pflanzen in das umgebende Medium, beispielsweise das Erdreich, ausgeschieden und chelatieren dort vorhandene Eisenionen, indem sie mit den Ionen Mehrfachbindungen eingehen und sehr starke Komplexe bilden. Auf diese Art führen Siderophore die Eisenionen u.a. den Produzenten über spezifische Transportsysteme wieder zu, aber auch anderen Organismen wie z.B. Pflanzen. Siderophore sind bereits in sehr geringen Mengen wirksam, sodass eine "Eisen Shuttle" Funktion nahegelegt wird, wobei beladene Siderophore dem Produzenten Eisen zuführen und dort entladen werden, wonach die entladenen Siderophore erneut Eisen chelatieren und heranschaffen können.

Im konventionellen oder biologischen Landbau kommt es zu Eisenmangelerscheinungen kommt es einerseits durch einen geringen Eisengehalt des Bodens. Andererseits können diese Mangelerscheinungen auch bei hoher Eisenkonzentration auftreten, wenn das vorhandene Eisen in Form von schwer löslichen Eisenoxiden vorliegt. Dies ist vor allem bei kalkreichen Böden mit hohem pH-Wert der Fall (lime induced chlorosis). Verstärkt werden Eisenmangelerscheinungen zusätzlich durch die Bildung von Bicarbonat an kalkreichen Standorten, welches die Translokation des Eisens in der Pflanze blockiert (bicarbonate induced chlorosis).

Die Eisenkonzentration im Boden hängt zusätzlich von der mikrobiologischen Aktivität im Boden ab, welche durch Zugabe von organischem Kohlenstoff erhöht werden kann. Der Standort bestimmt somit wesentlich den Gehalt und die Verfügbarkeit an Eisen.

Eisenmangel bei Pflanzen nennt man Chlorose. Sie macht sich durch ein Gelbwerden der Blätter bemerkbar. Durch das fehlende Eisen kann die Pflanze nicht genug Chlorophyll produzieren wodurch auch nur eingeschränkt Photosynthese betrieben werden kann. Die Pflanze wird in ihrem Wachstum gebremst und die Pflanzenerträge werden geringer. Betroffen sind neben vielen anderen Kulturen vor allem Obst- (Citrusfrüchte, Mango, Pfirsich, Kirsche, Birne, Apfel), Gemüse- und Weinbaustandorte, sowie Zierpflanzen im Gewächshaus und Freiland (iron inefficient plants).

Auch im Weinbau sind Chloroseerscheinungen häufig zu beobachten. Durch ein extrem rasches Wachstum und dem damit verbundenen hohen Energieverbrauch der wachsenden Triebspitze kann ein Energiemangel an den Wurzelspitzen eintreten. Dem hohen Eisenbedarf zur Chlorophyllbildung am Laubzuwachs steht durch den Energiemangel eine reduzierte Eisenaufnahme an den Wurzelspitzen entgegen. Eine zu geringe Eisenaufnahme führt zu mangelnder Chlorophyllbildung am Neuzuwachs, reduziert somit die Assimilation und verschlechtert damit den Energiestatus der Pflanze (Wachstumschlorose). Die alleinige Zufuhr von Stickstoff ist in dieser Situation kontraproduktiv, da ein zusätzlich gefördertes Triebwachstum den "Energiemangel" an der Wurzelspitze verschärft. Kommen hohe Niederschläge und niedrige Temperaturen hinzu (Schlechtwetterchlorose), kann sich die Situation für die Rebe noch verschärfen.

Pflanzen reagieren auf Eisenmangel sowohl mit spezifischen als auch nicht spezifischen Reaktionen. Als nicht spezifisch gilt eine Absenkung des pH-Wertes infolge einer bevorzugten Kationenaufnahme, einer N₂-Fixierung, sowie einer Ausscheidung organischer Säuren. Über die Wurzel ausgeschiedene Assimilate dienen Mikroorganismen als Substrat, welche ihrerseits wieder den pH-Wert absenken. Als spezifische Reaktion gilt die Produktion und Ausscheidung von Siderophoren.

Pflanzen haben zum Entladen der eisengebundenen Siderophore unterschiedliche Strategien entwickelt. Strategie I: Das im Siderophor gebundene Fe³⁺ wird an der Pflanzenwurzel zu Fe²⁺ reduziert und danach über einen Ionentransport aufgenommen. Strategie II: Es kommt zu einem Ligandentausch an den Wurzeln. Dabei wird das Fe³⁺ (Ligand) vom ursprünglichen Siderophor losgelassen und vom von den Pflanzen produzierten Phytosiderophor aufgenommen. Dieser Chelat-Ligand-Komplex kann von der Pflanzenwurzel aufgenommen und in die Zellen eingeschleust werden.

Zur Vorbeugung bzw. Behandlung von Eisenmangel bis hin zur Chlorose im Landbau ist die Aufbringung von Eisen angebracht. Bis jetzt werden dafür synthetische Eisenchelate, wie z.B. Fe-EDTA und Fe-EDDHA verwendet.

Insbesondere im biologischen Landbau ist die Zugabe von synthetischen Eisendüngern bzw. Eisenchelaten jedoch unerwünscht und wird von den Abnehmern der Früchte nicht akzeptiert. Noch dazu reichern sich diese Chelate nach Abgabe ihres gebundenen Eisenions an die Pflanze im Boden an und können nicht wieder für den Eisentransport verwendet werden. Ein weiterer großer Nachteil der synthetischen Chelate ist ihre Unbeständigkeit gegenüber UV-Strahlung, was bedeutet, dass sie an der Oberfläche durch die Sonneneinstrahlung abgebaut werden.

Ganz anders die Siderophore. Da sie durch einen Organismus natürlich gebildet werden, können sie problemlos in der biologischen Landwirtschaft eingesetzt werden. Außerdem wird ihnen die Fähigkeit bescheinigt, nachhaltig zu wirken und UV-resistent zu sein. Das heißt nach Abgabe des Eisenions an die Pflanze, entweder durch Reduktion an der Wurzel (Strategie I) oder durch Ligandentausch (Strategie II), kann das eisenfreie Siderophor wieder neues Eisen aus dem Boden binden und erneut zur Pflanze transportieren. Damit reicht im Vergleich zu den synthetischen Eisenchelaten eine geringere Dosierung aus, deren Wirkung auch länger anhält.

Das Siderophor Coprogen wird ausschließlich von Pilzen gebildet, kann jedoch auch von Pflanzen aufgenommen und verwertet werden. Vor allem Ascomyceten, wie Trichoderma, Fusarium, Penicillium und Neurospora, bilden Coprogen. Dieses spezielle Chelat (griech. Krebsschere) besteht aus drei metallbindenden Hydroxamat-Einheiten, die einen Diketopiperazin-Ring enthalten. Das Eisen wird in Form von Fe³⁺-Ionen sechsfach gebunden und kann durch einen pH-abhängigen Redoxmechanismus als Fe²⁺-Ionen wieder freigesetzt werden. Bei der basischen Hydrolyse von Coprogen mit Ethanol bilden sich zwei Hauptprodukte, nämlich N-Acetylfusarininethylester und Dimerumsäure. Diese Hydrolyse (eigentlich eine Esterspaltung) passiert im Boden durch dort natürlich vorkommende Esterasen. Dimerumsäure bindet das Eisenion vierfach, während N-Acetylfusarinin eine Zweifachbindung mit dem Eisen eingeht. Durch die geringere Komplexbildungskonstanten von Dimerumsäure und N-Acetylfusarinin verglichen mit Coprogen kann das Eisen viel leichter aus diesen Komplexen herausgelöst werden (bei Strategie I: mittels von den Pflanzen produzierten Reduktasen; bei Strategie II: mittels von den Pflanzen produzierten Phytosiderophoren). Somit ist es leichter für die Pflanze verfügbar als bei dem Eisen-Coprogen-Komplex, dessen Komplexbildungskonstante sehr hoch und das Eisenion kaum herauslösbar ist. Unter Desferricoprogen wird im Folgenden das nicht mit Eisen beladene Coprogen verstanden.

Bei der Herstellung von Bioethanol aus stärkehaltigen Pflanzen wie z,B. Weizen, Roggen, Triticale und Mais, fällt nach der Destillation eine sogenannte Trockenschlempe als Rückstand an. Diese Trockenschlempe wird im internationalen Sprachgebrauch zumeist als Dried Distillers Grains with Solubles (DDGS) bezeichnet und wird zurzeit überwiegend als Futtermittel bzw. zur Vergärung in Biogasanlagen verwendet. Aufgrund seines hohen Proteingehalts von bis zu 35 % stellt DDSG neben Soja und Raps das häufigste Proteinfuttermittel für Nutztiere dar. Aufgrund der enthaltenen Mineralien eignet sich DDGS auch als Düngemittel. So besteht 1 kg DDGS aus etwa 840 g organischer Substanz, etwa 50 g Stickstoff, etwa 20 g P₂O₅ und etwa 10 g K₂O. Der Stickstoff ist fast vollständig in Proteinen fixiert und wird während der Vegetationsperiode langsam freigesetzt (mineralisiert). Erst in dieser Form kann er dann von der Pflanze aufgenommen werden. DDGS bildet auch die Grundlage von biologischen Düngern wie BioAgenasol^{®} (AGRANA Bioethanol GmbH, Pischelsdorf, AT), welche für alle Gemüsearten und für Rasen, sowie für Balkonblumen und auch alle Arten von Zierpflanzen und Ziersträucher geeignet sind. Die spezielle Mischung dieses Düngers bewirkt nicht nur eine gute Nährstoffversorgung und Stimulierung der Bodenmikroorganismen, sondern mobilisiert auch noch die vielfach nicht pflanzenverfügbaren Nährstoffe wie Phosphor und Kalium. Die Analysenwerte von BioAgenasol^{®} unterliegen natürlichen Schwankungen und sind somit lediglich als Richtwerte anzusehen. BioAgenasol^{®} enthält als org. Substanz bez. TS etwa 90 %-Masse, mit einem Gesamtstickstoff von etwa 5,5 %-Masse. Weiters enthält BioAgenasol^{®} als Gesamtphosphor (P₂O₅ gesamt) etwa 2,5 %-Masse, Kaliumoxid (K₂O gesamt) etwa 1,5 %-Masse, ein Schüttgewicht von etwa 550 g/l, eine Trockensubstanz von min. 88,0 %-Masse, Rohasche etwa 6,0 %-Masse, Calciumoxid (CaO) etwa 0,15 %-Masse, Magnesiumoxid (MgO) etwa 0,6 %-Masse, Natriumoxid (NaO) etwa 1,0 %-Masse und ist chloridfrei mit < 0,5 %-Masse.

Aufgabe der vorliegenden Erfindung ist es, im Boden vorhandenes Eisen zur Vorbeugung bzw. Behandlung von Eisenmangel zu mobilisieren und dieses Eisen den Pflanzen verfügbar zu machen und dafür gleichzeitig ein biologisches Düngemittel vorzusehen.

Diese Aufgabe wird erfindungsgemäß dadurch gelöst, dass eine Düngekombination enthaltend Trockenschlempe aus der Herstellung von Bioethanol zusammen mit Desferricoprogen oder einem Hydrolysat hievon zur Verfügung gestellt wird, wodurch überraschenderweise die synergistischen Effekte einer Düngekombination eines Stickstoffträgers mit einem Eisenträger bei der Blattgrünbildung gemäß Stand der Technik erreicht werden, obwohl die erfindungsgemäße Düngekombination kein Eisen in verfügbarer Form enthält. Die alleinige Zufuhr von Stickstoff mittels einer reinen Stickstoffquelle zusammen mit einem oder mehreren Siderophoren kann in manchen Situationen auch kontraproduktiv sein.

Gemäß einer bevorzugten Ausführungsform enthält die Düngekombination weiters Kartoffelrestfruchtwasserkonzentrat, im internationalen Sprachgebrauch als Protamylasse oder auch als Potato Nitrogen Concentrate (PNC) bezeichnet. Protamylasse fällt bei der Stärkegewinnung aus Kartoffeln als Nebenprodukt an und besteht hauptsächlich aus der aufkonzentrierten Flüssigkeit, welche nach dem Fällen der denaturierbaren Proteine und dem Abtrennen der Stärke übrigbleibt. PNC eignet sich hervorragend als Düngemittel. Ein kg PNC besteht aus 470 g organischer Substanz, rund 20 g Stickstoff, 10 g P₂O₅ und 80 g K₂O. Auch hier ist der Stickstoff fast vollständig in organischem Material gebunden und wird langsam freigesetzt. Protamylasse ist am Markt von fast allen großen Kartoffelstärkeproduzenten, wie Avebe, Emsland Stärke und Agrana frei erhältlich.

Gemäß einer weiteren bevorzugten Ausführungsform enthält die Düngekombination mindestens ein weiteres Mitglied der Gruppe bestehend aus Nebenprodukten aus der Zuckergewinnung aus Zuckerrüben wie z.B. Carbokalk (Carbonatationskalk aus der Reinigung der Zuckerrübenrohsäfte in einer Zuckerfabrik) bzw. Restmelasse (entzuckerte Melasse), Nebenprodukten aus der Produktion von Mais- bzw. Wachsmaisstärke wie z.B. Corn Steep Liquor (CSL), Nebenprodukten aus der Weizenstärkegewinnung, Nebenprodukten aus der Verarbeitung von Früchten (Fruchtsaftkonzentratherstellung, Produktion von Fruchtzubereitungen) wie z.B. Apfeltrester, sowie Mischungen hievon.

Überrraschend hat sich gezeigt, dass das Coprogen oder sein Hydrolysat nicht mit Eisen beladen sein muss, ja dass die Wirkung von unbeladenem Coprogen sogar höher ist als die Wirkung von mit Eisen bereits beladenem Coprogen. Die Applikation der erfindungsgemäßen Düngekombinationen bei der Pflanze erfolgt hierzu durch Zufuhr über den Boden oder bei stark chlorotischen Pflanzen auch über das Blatt. Die Blattapplikation wirkt rasch und zeigt auch eine gute Wirkung bei der Bildung von Chlorophyll. Überraschend dabei ist, dass durch Desferricoprogen ausschließlich bereits im Boden vorhandenes Eisen mobilisiert wird, mit dem zusätzlichen Vorteil, dass der Pflanze keinerlei bereichsfremde Spurenelemente zugeführt werden.

Schlussendlich betrifft die vorliegende Erfindung die Verwendung einer oben genannten Düngekombination im biologischen Landbau. Durch die erfindungsgemäße Düngekombination kann ein Dünger zur Verfügung gestellt werden, welcher auch unter nachteiligen Bedingungen eine ausreichende Versorgung der Pflanzen mit Eisen sicherstellt. Der Dünger enthält dabei neben DDGS als organische Stickstoffquelle das Desferricoprogen in einer Menge von 0,5 bis 20 g/t Düngemittel bzw. 1 bis 10 g/t, bevorzugt 2 bis 7,5 g/t und am meisten bevorzugt 2 bis 5 g/t. Vorzugsweise wird die erfindungsgemäße Düngekombination je nach Pflanze in einer Menge von zwischen 200 und 3000 kg pro ha Bodenfläche ausgebracht, bevorzugt von zwischen 500 und 1500 kg pro ha, besonders bevorzugt in einer Menge von zwischen 500 und 1000 kg pro ha Bodenfläche.

Die Erfindung wird nun anhand der folgenden Beispiele näher erläutert, ohne darauf beschränkt zu sein.

### Beispiel 1:

Für die Produktion von Desferricoprogen wird der Stamm Neurospora crassa 1497 verwendet. Der Pilz bildet ein filamentöses, septiertes und verzweigtes Mycel, welches unter bestimmten Bedingungen vom vegetativen Wachstum zur Sporenbildung wechselt. Die Züchtung erfolgt aerob auf einem Hefeextrakt-Malzextrakt-Glucose-Agar bei vorzugsweise 27 °C.

Die Produktion von Desferricoprogen im Großmaßstab erfolgt als gut belüftete Submerskultur im Fermenter mit einem speziellen Fermentationsmedium, welches sich wie folgt zusammensetzt: 2,5 g/L L-Asparagin, 1 g/L K₂HPO₄/3H₂O, 1 g/L MgSO₄*7H₂O, 0,5 g/L CaCl₂*2H₂O, 20 mg/L ZnSO₄*7H2O, 10 mg/L Biotin, 30 g/L Glucose, 0,5 g/L Hefeextrakt, 2 ml/L Antischaum und 1 L Deionat. Wichtig ist, dass alle Bestandteile eisenfrei sind. Nach sechs Tagen erreicht man bereits eine Konzentration an Desferricoprogen von ca. 1 g/L.

Nach Beendigung der Fermentation wird die Fermentationsbrühe auf das handelsübliche DDGS (z.B. BioAgenasol von Agrana, AT) aufgebracht, bis eine Endkonzentration von 2 bis 5 g Desferricoprogen pro Tonne DDGS erreicht ist.

Des Weiteren wurde das Mycel vom Kulturfiltrat mit einer Siebmantelzentrifuge unter der Anwendung des Filterhilfsmittels Kieselgur abgetrennt.

### Beispiel 2:

Eine Coprogenlösung wurde mit Ethanol versetzt bis eine 10 %ige Lösung entsteht. Der pH-Wert wird mit Ammoniak auf 10 gestellt und dann wird das ganze ca. 16 Stunden bei 55 °C stehen gelassen. Während der Hydrolyse entsteht aus Coprogen Dimerumsäure und Fusarinin-ethylester, da diese Moleküle leichter von den Pflanzen aufgenommen werden können.

Düngeversuche mit Gurke (Var. chinesische Schlange) als Pflanze unter Verwendung einer Kombination von DDGS (BioAgenasol^{®}) und Desferricoprogen mit Fe-EDDHA bzw. Agrobiosol ^{®} (SW-Düngesysteme GmbH, Wolfenbüttel, DE) enthaltend das Siderophor Desferrioxamin B als Kontrolle wurden durchgeführt. Es erfolgte eine einmalige Düngung. Der Beobachtungszeitraum betrug 56 Tage. 10 Düngevarianten werden für die Düngeversuche auf jeweils 24 m² (8 x 3 m) großen Feldern angewendet, pro Parzelle (24 m²) standen im Durchschnitt 60 Pflanzen. Für die Frischmassebestimmung wurden pro Parzelle 40 Pflanzen geerntet (jeweils links und rechts wurden die Pflanzen im äußersten Meter der Parzelle stehengelassen). Die Bewässerung erfolgte je nach Trockenheit des Bodens, insgesamt wurde dreimal bewässert. Etwa zur Halbzeit wurden alle Parzellen zusätzlich einmalig mit etwa 75 kg Nitramoncal (enthält 27 % Rein-Stickstoff) pro 1000 m² gedüngt.
Var. 1 (Vergleich): 5 Parzellen ohne Düngung, Durchschnitt von 5 Messungen: Frischmasse der geernteten Pflanzen (FM) ges. 251,9 g,
Var.2 (Vergleich): 5 Parzellen jeweils mit 1,92 kg BioAgenasol^{®} gedüngt, Durchschnitt von 5 Messungen: FM ges. 359,3 g,
Var.3: 7 Parzellen jeweils mit 1,92 kg BioAgenasol^{®} mit 10 ppm Desferricoprogen (DFC) (19,2 mg DFC pro Feld oder 8 g reines Siderophor/ha) gedüngt, Durchschnitt von 7 Messungen: FM ges. 371,7 g,
Var.4: 8 Parzellen jeweils mit 1,92 kg BioAgenasol^{®} mit 20 ppm DFC (38,4 mg DFC pro Feld oder 16 g reines Siderophor/ha) gedüngt, Durchschnitt von 8 Messungen: FM ges. 401,3 g,
Var.5: 7 Parzellen jeweils mit 1,92 kg BioAgenasol^{®} mit 37,5 ppm DFC (72 mg DFC pro Feld oder 30 g reines Siderophor/ha) gedüngt, Durchschnitt von 7 Messungen: FM ges. 431,9 g,
Var.6 (Vergleich): 5 Parzellen jeweils mit 19,2 mg Coprogen in 3 L Wasser (8 g reines Siderophor/ha), Durchschnitt von 5 Messungen: FM ges. 268,8 g,
Var.7 (Vergleich): 6 Parzellen jeweils mit 38,4 mg Coprogen in 3 L Wasser (16 g reines Siderophor/ha), Durchschnitt von 6 Messungen: FM ges. 333,6 g,
Var.8 (Vergleich): 6 Parzellen jeweils mit 72 mg Coprogen in 3 L Wasser (30 g reines Siderophor/ha), Durchschnitt von 6 Messungen: FM ges. 385,5 g,
Var.9 (Vergleich): 6 Parzellen jeweils mit 0,013 kg Sequestren 138 in 3 L Wasser. (6 % Eisen-EDDHA), Durchschnitt von 6 Messungen: FM ges. 263,5 g,
Var.10 (Vergleich): 5 Parzellen jeweils mit 1,92 kg Agrobiosol^{®} (enthält 38,4 mg Siderophor Desferrioxamin B pro Feld oder 16 g reines Siderophor/ha), Durchschnitt von 5 Messungen: FM ges. 277,5 g.

Es zeigte sich, dass die mit verschiedenen Konzentrationen von Desferricoprogen in Kombination mit DDGS gedüngten Pflanzen der Var. 3, 4 und 5 bei der Ernte überraschenderweise eine stark erhöhte Frischmasse (FM) aufwiesen, dies im Vergleich zu jenen Pflanzen, welche nur mit Coprogen in verschiedenen Konzentrationen (Var. 6, 7 und 8), nur mit DDGS (BioAgenasol®, Var. 2), nur mit Fe-EDDHA (Sequestren ®, Var. 9) bzw. nur mit Biosol® (enthaltend das Siderophor Desferrioxamin B, Var. 10) gedüngt wurden.

**Tabelle 1: Trockenmasseertrag, Eisenmenge bei Gurke (chinesische Schlange).**

| Variante | Düngung pro Parzelle | FM |
|---|---|---|
| Var.1 | Vergleich, ohne Düngung | **197,6** |
| Var.2 | Vergleich, mit 1,92 kg DDGS | **359,3** |
| Var.3 | 1,92 kg DDGS mit 19,2 mg DFC | **371,7** |
| Var.4 | 1,92 kg DDGS mit 38,4 mg DFC | **401,3** |
| Var.5 | 1,92 kg DDGS mit 72 mg DFC | **431,9** |
| Var.6 | Vergleich, 19,2 mg Coprogen | **268,8** |
| Var.7 | Vergleich, 38,4 mg Coprogen | **333,6** |
| Var.8 | Vergleich, 72 mg Coprogen | **385,5** |
| Var.9 | Vergleich, 0,013 kg Sequestren | **263,5** |
| Var.10 | Vergleich, 1,92 kg Agrobiosol® mit Desferrioxamin B | **277,5** |

## Patentansprüche

1. Düngekombination enthaltend Trockenschlempe aus der Herstellung von Bioethanol zusammen mit Desferricoprogen oder einem Hydrolysat hievon.

2. Düngekombination nach Anspruch 1, **dadurch gekennzeichnet, dass** sie weiters Kartoffelrestfruchtwasserkonzentrat enthält.

3. Düngekombination nach Anspruch 1, **dadurch gekennzeichnet, dass** sie weiters mindestens ein Mitglied der Gruppe bestehend aus Carbokalk bzw. Restmelasse, Nebenprodukten aus der Produktion von Mais- bzw. Wachsmaisstärke, Nebenprodukten aus der Weizenstärkegewinnung, Nebenprodukten aus der Verarbeitung von Früchten wie Fruchtsaftkonzentratherstellung und Produktion von Fruchtzubereitungen, sowie Mischungen hievon enthält.

4. Verwendung einer Düngekombination nach einem der Ansprüche 1 bis 3 im biologischen Landbau.
